# FASCICULE DE BREVET EUROPEEN

(11) **EP 3 634 775 B1**
(45) Date de publication et mention de la délivrance du brevet: **03.08.2022**
(21) Numéro de dépôt: 18736995.4
(22) Date de dépôt: 07.06.2018
(51) Int. Cl.: B60B 3/16, B60B 3/10, B60B 5/02, B60C 7/00

(54) **ROUE DE MONTAGE POUR VÉHICULE AUTOMOBILE ET ENSEMBLE MONTÉ COMPORTANT UNE TELLE ROUE DE MONTAGE**
RADAUFNAHME FÜR KRAFTFAHRZEUG UND MONTIERTE ANORDNUNG MIT SOLCH EINER RADAUFNAHME
MOUNTING WHEEL FOR MOTOR VEHICLE AND MOUNTED ASSEMBLY COMPRISING SUCH A MOUNTING WHEEL

(30) Priorité: 09.06.2017 FR 1755147
(43) Date de publication de la demande: 15.04.2020
(73) Titulaire: Compagnie Générale des Etablissements Michelin, 63000 Clermont-Ferrand (FR)
(72) Inventeur: EL-OULHANI, Mostapha, 63040 Clermont-Ferrand Cedex 9 (FR); MUHLHOFF, Olivier, 63040 Clermont-Ferrand Cedex 9 (FR)
(74) Mandataire: Roussy, Delphine
(86) Numéro de dépôt international: PCT/FR2018/051332
(87) Numéro de publication internationale: WO 2018/224787

(56) Documents cités:
- WO-A1-2008/009042
- WO-A1-2015/104213
- WO-A2-2004/028832
- DE-A1- 19 957 255
- JP-A- 2009 035 051
- US-A- 5 601 343
- US-A1- 2014 000 777
- US-A1- 2016 147 973

## Description

### DOMAINE TECHNIQUE DE L'INVENTION

La présente invention se rapporte à une roue de montage pour un véhicule automobile et, plus précisément, une telle roue de montage comportant un aspect amélioré.

### ARRIÈRE-PLAN TECHNIQUE DE L'INVENTION

Le document DE 199 57 255 A1 décrit une roue de montage pour véhicule automobile.

La prise en compte de l'esthétique et de l'aspect purement ornemental dans l'élaboration d'un bandage pneumatique monté sur une roue de montage pour les véhicules conçus aujourd'hui prend une importance de plus en plus grande. Les concepteurs desdits ensembles sont parfois conduits à créer des motifs décoratifs qui occupent à la fois la surface extérieure du pneumatique (plus particulièrement sur la partie flanc qui s'étend entre la bande de roulement et la partie du pneumatique en contact avec la roue) et sur celle de l'enjoliveur équipant la roue de montage sur laquelle est monté le pneumatique.

Dans ce cadre, il peut être très intéressant sur le plan décoratif de créer un motif qui présente une unité d'ensemble à la fois sur la surface visible de l'enjoliveur et sur la surface externe visible du pneumatique. Par motif présentant une unité d'ensemble, on entend un motif qui ne présente pas de discontinuité visuelle apparente entre la surface d'un flanc décoré et la surface visible de l'enjoliveur situé du côté du flanc décoré.

Dans le cas d'un motif présentant une unité d'ensemble, un premier problème se pose après le montage du pneumatique sur sa roue de montage au moment de la mise en place de l'enjoliveur. En effet, il est parfois délicat de positionner correctement l'enjoliveur par rapport au motif du pneumatique de façon à retrouver le motif sans discontinuité entre la partie dudit motif présente sur le flanc et celle présente sur l'enjoliveur. Cela est d'autant plus vrai que ledit motif n'est pas nécessairement répétitif dans le sens circonférentiel et qu'il est alors impératif de mettre en parfaite correspondance lesdites deux parties pour retrouver le motif décoratif voulu.

### RÉSUMÉ DE L'INVENTION

L'invention a pour but de remédier à ces inconvénients en fournissant une roue de montage d'un ensemble monté dont la surface visible présente un aspect homogène permettant une plus grande liberté esthétique.

À cet effet, l'invention se rapporte à une roue de montage pour véhicule automobile comportant une surface interne et une surface externe, la surface interne n'étant pas visible lorsque la roue de montage est montée sur le véhicule automobile, et au moins un élément de fixation agencé pour attacher la roue de montage au véhicule automobile, **caractérisée en ce que** l'élément de fixation est agencé sur la surface interne de la roue de montage afin de laisser la surface externe de la roue de montage libre de tout l'élément de fixation pour que ce dernier ne soit pas visible lorsque la roue de montage est montée sur le véhicule automobile.

Selon l'invention, la surface externe de la roue de montage est libre de tout élément de fixation ou enjoliveur destiné à cacher toute fixation de l'ensemble monté. La surface externe de la roue de montage peut ainsi être fabriquée avec un profil régulier, sans discontinuités au niveau du centre de la roue de montage, voire comme expliqué ci-dessous du centre de la roue de montage à la bande de roulement. Un tel profil régulier peut ainsi être une surface totalement plane favorable aérodynamiquement sans pièce supplémentaire.

De plus, la roue de montage devient plus difficile à voler lorsqu'elle est montée sur un véhicule automobile. En effet, son retrait requière une accessibilité par la surface interne qui dissuadera un voleur d'essayer de les démonter.

Enfin, la place libérée au centre peut permettre l'intégration d'éléments qu'il n'était pas possible de monter à cause de la présence des éléments de fixation comme un circuit de transmission de signaux sans contact, un micro-processeur ou encore des éléments d'éclairage.

Selon d'autres caractéristiques optionnelles de réalisation de l'invention :
- laquelle l'élément de fixation comporte une partie d'au moins une fixation du type trou d'attache - tige d'attache ;
- le trou d'attache est un alésage ou un écrou et la tige d'attache est une vis ou goujon au moins partiellement fileté ;
- le trou d'attache est ménagé sur la surface interne de la roue de montage ;
- la tige d'attache est montée sur la surface interne de la roue de montage ;
- la roue de montage comporte entre 3 et 9 éléments de fixation ;
- les éléments de fixation sont régulièrement répartis autour d'un axe de rotation de la roue de montage.

De plus, l'invention se rapporte à un ensemble monté comprenant une bande de roulement agencée pour permettre le roulage de l'ensemble monté sur une chaussée, **caractérisé en ce qu'**il comporte une roue de montage telle que présentée plus haut.

Selon d'autres caractéristiques optionnelles de réalisation de l'invention :
- la bande de roulement est solidaire de la roue de montage par une masse intermédiaire ;
- la masse intermédiaire comprend au moins une partie réalisée dans un matériau comportant une pluralité de cavités ;
- la masse intermédiaire et la roue de montage sont venus de matière et comprennent au moins une partie réalisée dans un matériau comportant une pluralité de cavités ;

- le matériau comportant une pluralité de cavités présente plus de cavités à proximité de la bande de roulement que du centre de la roue de montage ;
- la partie réalisée dans un matériau comportant une pluralité de cavités forme une structure tridimensionnelle comportant une pluralité de poutres ;
- les poutres sont orientées de façon à former un treillis ;
- le treillis forme une structure du type en diagramme de Voronoï avec une triangulation de Delaunay ;
- le matériau comportant une pluralité de cavités est en polyuréthane ou en caoutchouc.

Enfin, l'invention se rapporte à un véhicule automobile comprenant un système de suspension, **caractérisé en ce qu'**il comprend un ensemble monté tel que présenté plus haut dont l'élément de fixation est attaché au système de suspension.

### BRÈVE DESCRIPTION DES DESSINS

D'autres particularités et avantages ressortiront clairement de la description qui en est faite ci-après, à titre indicatif et nullement limitatif, en référence aux dessins annexés, dans lesquels :
- La figure 1 est une vue en coupe d'un premier mode de réalisation d'un ensemble monté relié à un système de suspension de véhicule automobile selon une première variante de l'invention ;
- La figure 2 est une vue en coupe du premier mode de réalisation d'un ensemble monté relié à un système de suspension de véhicule automobile selon une deuxième variante de l'invention ;
- La figure 3 est une vue en coupe du premier mode de réalisation d'un ensemble monté relié à un système de suspension de véhicule automobile selon une troisième variante de l'invention ;
- La figure 4 est une vue schématique partielle d'un exemple de système de suspension de véhicule automobile ;
- La figure 5 est une vue en coupe du premier mode de réalisation de roue de montage selon la troisième variante de l'invention ;
- La figure 6 est une vue en perspective de la surface externe du premier mode de réalisation de l'ensemble monté selon la troisième variante de l'invention ;
- La figure 7 est une vue en perspective de la surface interne du premier mode de réalisation de l'ensemble monté selon la troisième variante de l'invention ;
- La figure 8 est une vue en perspective agrandie de la figure 6 ;
- La figure 9 est une vue en coupe d'un deuxième mode de réalisation d'un ensemble monté relié à un système de suspension de véhicule automobile selon l'invention ;
- La figure 10 est une vue en coupe du deuxième mode de réalisation d'une roue de montage selon l'invention.

### DESCRIPTION DÉTAILLÉE D'AU MOINS UN MODE DE RÉALISATION DE L'INVENTION

Sur les différentes figures, les éléments identiques ou similaires portent les mêmes références. La description de leur structure et de leur fonction n'est donc pas systématiquement reprise.

Dans tout ce qui suit, les orientations sont les orientations habituelles d'un véhicule automobile. En particulier, les termes « supérieur », « inférieur », « gauche », « droit », « au-dessus », « en-dessous », « vers l'avant » et « vers l'arrière » s'entendent généralement par rapport au sens normal de circulation du véhicule automobile et à la position du conducteur.

Par « bandage pneumatique », on entend tous les types de bandages élastiques soumis à une pression interne.

Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement », on entend une quantité de matériau caoutchoutique délimitée par des surfaces latérales et par deux surfaces principales dont l'une, appelée surface de roulement, est destinée à entrer en contact avec une chaussée lorsque le pneumatique roule.

L'invention se rapporte à un ensemble monté 1 destiné à être relié à un véhicule automobile et, plus précisément, monté rotatif selon l'axe A par rapport à un système de suspension 11 d'un tel véhicule automobile. On comprend donc qu'un véhicule automobile à quatre bandes de roulement 5 comportera quatre ensembles montés 1.

L'ensemble monté 1 comporte une roue de montage 3 comprenant une surface interne 2 et une surface externe 4. La surface interne 2 est destinée à faire face au véhicule automobile au niveau de son système de suspension 11. On comprend donc, qu'une fois montée sur le véhicule automobile, la roue de la montage 3 n'est principalement visible que par sa surface externe 4. L'ensemble monté 1 comporte, en outre, une bande de roulement 5 agencée pour permettre le roulage de l'ensemble monté 1 sur une chaussée.

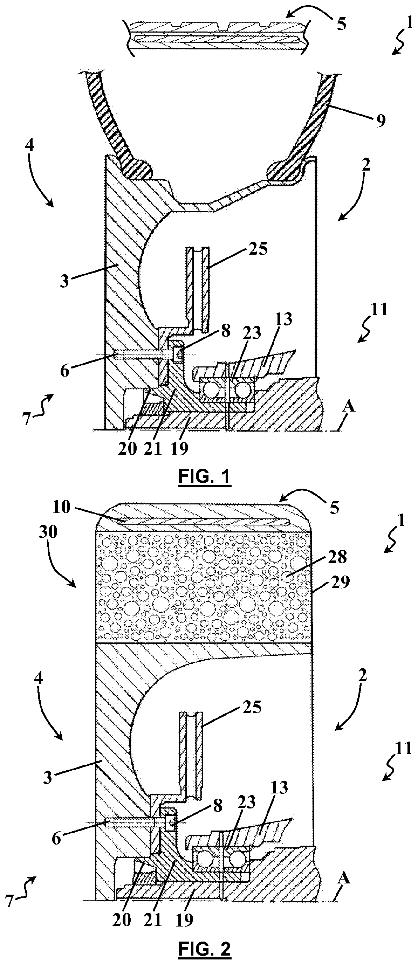

La roue de montage 3 comporte au moins un élément de fixation 7 agencé pour attacher la roue de montage 3 au véhicule automobile. Avantageusement selon l'invention, chaque élément de fixation 7 est agencé sur la surface interne 2 de la roue de montage 3 afin que seule la surface externe 4 soit visible lorsque l'ensemble monté 1 est assemblé sur le véhicule automobile, c'est-à-dire notamment que chaque élément de fixation 7 soit totalement masqué. On comprend notamment que, de manière préférée, la surface externe 4 ne communique pas avec la surface interne 2 au niveau du centre de la roue de montage 3, c'est-à-dire que la surface externe 4 est pleine au niveau du centre de la roue de montage 3 comme illustré dans les figures 1-3, 5-7 et 9-10.

L'élément de fixation 7 peut être de natures variées. Toutefois, de manière préférée, l'élément de fixation 7 comporte une partie d'au moins une fixation du type trou d'attache 6 - tige d'attache 8 qui est simple et robuste. Plus précisément, le trou d'attache 6 peut être un alésage ou un écrou et la tige d'attache 8 peut être une vis ou un goujon fileté.

Bien entendu, la direction de montage de chaque élément de fixation 7 peut se faire indifféremment parallèlement à l'axe de rotation A de la roue de montage 3, perpendiculairement ou de manière oblique. De plus, chaque roue de montage 3 peut comprendre entre 3 et 9 éléments de fixation suivant sa configuration qui peuvent être distribués symétriquement ou non sur la surface interne 2 de la roue de montage 3. À titre nullement limitatif, les éléments de fixation 7 pourraient ainsi être régulièrement répartis autour de l'axe de rotation A de la roue de montage 3.

Selon un premier mode de réalisation visible aux figures 1 à 3 et 5 à 8, l'élément de fixation 7 forme un trou d'attache 6 ménagé sur la surface interne 2 de la roue de montage 3. Plus précisément, le trou d'attache 6 forme un alésage destiné à recevoir une tige d'attache 8 comme une vis.

Comme visible à la figure 1, une première variante du premier mode de réalisation de l'ensemble monté 1 comporte une bande de roulement 5 qui est solidaire de la roue de montage 3 par un bandage pneumatique 9 classique en matière caoutchoutique. On comprend donc que la roue de montage 3, par exemple en alliage métallique comme à partir d'aluminium, forme, dans cette première variante, une jante. La roue de montage 3 comporte des trous d'attache 6 régulièrement répartis autour d'un axe de rotation A sur sa surface interne 2.

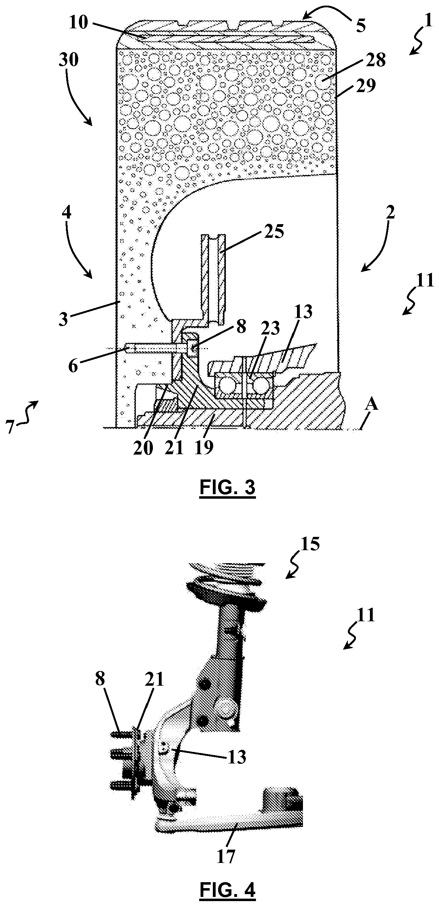

Comme visible à la figure 4, un exemple de système de suspension 11 destiné à recevoir l'ensemble monté 1 est présenté. Le dispositif de suspension 11 comporte un porte-fusée 13 faisant le lien entre le châssis du véhicule automobile et l'ensemble monté 1. Le porte-fusée 13 est solidaire, dans sa partie supérieure, à un assemblage 15 comportant un amortisseur et un ressort de suspension et, dans sa partie inférieure, à un bras de suspension 17.

À la figure 1, on peut voir que le porte-fusée 13 reçoit également dans sa partie centrale ajourée une fusée 19 destinée à transmettre un mouvement à l'ensemble monté 1. Plus précisément, le mouvement relatif entre la fusée 19 et le porte-fusée 13 est rendu possible par la réception de la fusée 19 dans un moyeu 21 monté dans le porte-fusée 13 à l'aide de roulements 23.

Dans le montage visible à la figure 1, on comprend que le système de suspension 11 est préalablement équipé de la fusée 19, du moyeu 21 et d'un dispositif de freinage 25 (représenté par un disque de frein à la figure 1). L'ensemble monté 1 est ensuite ajusté sur la collerette 20 du moyeu 21 puis attaché par coopération entre les trous d'attache 6 et les tiges d'attache 8.

Plus précisément, l'ensemble monté 1 est approché du moyeu 21 par un opérateur positionné du côté de la surface interne 2 de la roue de montage 3. L'opérateur positionne l'ensemble monté 1 de façon à ce que les trous d'attache 6 soient en face des tiges d'attache 8 puis visse les tiges d'attache 8 jusqu'à ce que chaque tête des tiges d'attache 8 soit bloquée contre le moyeu 21. Chaque tige d'attache 8 rend donc solidaire le système de suspension 11 avec l'ensemble monté 1 uniquement par montage depuis la surface interne 2 de la roue de montage 3.

Avantageusement selon l'invention, la roue de montage 3 comporte ainsi une surface externe 4 qui est libre de tout élément de fixation ou enjoliveur destiné à cacher ces éléments de fixation. La surface externe 4 peut ainsi être fabriquée avec un profil régulier, sans discontinuités au niveau de la roue de montage 3. Un tel profil régulier peut ainsi être une surface totalement plane particulièrement favorable au niveau aérodynamique sans ajout de pièce supplémentaire. On comprend notamment que la surface externe 4 peut être pleine au niveau du centre de la roue de montage 3 comme illustré dans la figure 1.

De fait, en plus d'apporter une surface externe 4 qui est libre de tout élément de fixation ou enjoliveur, l'ensemble monté 1 est également difficile à voler lorsqu'il est monté sur un véhicule automobile. En effet, le changement de chaque ensemble monté 1 requière une accessibilité par la surface interne 2 qui dissuadera un voleur d'essayer de les démonter. Dans l'exemple de la figure 1, la configuration du porte-fusée 13 permet d'accéder à la tige d'attache 8 pour démonter l'ensemble monté 1. Il suffit alors de tourner l'ensemble monté 1 pour accéder à chaque tige d'attache 8.

Cette première variante est adaptée aux véhicules électriques qui pourraient ainsi recevoir des moteurs sur la surface interne 2 des ensembles montés 1 en lieu et place de la fusée 19.

Enfin, la place libérée au centre, c'est-à-dire la partie pleine de la surface externe 4, peut permettre l'intégration d'éléments qu'il n'était pas possible de monter à cause de la présence des éléments de fixation 7. À titre d'exemple nullement limitatifs, le centre de la roue de montage 3 pourrait ainsi intégrer des éléments permettant le regonflage du bandage pneumatique 9, un circuit de transmission de signaux sans contact, un micro-processeur ou encore des éléments d'éclairage.

Comme visible à la figure 2, une deuxième variante du premier mode comporte une bande de roulement 5 qui est solidaire de la roue de montage 3 par une masse intermédiaire 29 en polyuréthane ou en caoutchouc en formant un ensemble monté 1 du type composite. Comme visible à la figure 2, la bande de roulement 5 peut comporter un renfort 10 (par exemple une nappe de renfort) permettant d'assurer une bonne tenue mécanique et/ou une bonne rigidité à proximité de l'aire de contact avec la chaussée. La roue de montage 3, par exemple en alliage métallique comme à partir d'aluminium, comporte des trous d'attache 6 régulièrement répartis autour de l'axe de rotation A sur sa surface interne 2.

Comme visible à la figure 2, la masse intermédiaire 29 comprend au moins une partie comportant une pluralité de cavités 28. Préférentiellement dans cette deuxième variante, les cavités 28 sont emprisonnées dans la masse intermédiaire 29 et ne communiquent pas ou peu entre elles. La masse intermédiaire 29 permet ainsi d'apporter une élasticité et une résistance mécanique comparable au bandage pneumatique 9 de la première variante tout en étant increvable.

À la figure 2, on peut voir que le porte-fusée 13 reçoit dans sa partie centrale ajourée une fusée 19 destinée à transmettre un mouvement à l'ensemble monté 1. Plus précisément, le mouvement relatif entre la fusée 19 et le porte-fusée 13 est rendu possible par la réception de la fusée 19 dans un moyeu 21 monté dans le porte-fusée 13 à l'aide de roulements 23.

Dans le montage visible à la figure 2, on comprend que le système de suspension 11 est préalablement équipé de la fusée 19, du moyeu 21 et d'un dispositif de freinage 25 (représenté par un disque de frein à la figure 2). L'ensemble monté 1 est ensuite ajusté sur la collerette 20 du moyeu 21 puis attaché par coopération entre les trous d'attache 6 et les tiges d'attache 8.

Plus précisément, l'ensemble monté 1 est approché du moyeu 21 par un opérateur positionné du côté de la surface interne 2 de la roue de montage 3. L'opérateur positionne l'ensemble monté 1 de façon à ce que les trous d'attache 6 soient en face des tiges d'attache 8 puis visse les tiges d'attache 8 jusqu'à ce que chaque tête des tiges d'attache 8 soit bloquée contre le moyeu 21. Chaque tige d'attache 8 rend donc solidaire le système de suspension 11 avec l'ensemble monté 1 uniquement par montage depuis la surface interne 2 de la roue de montage 3.

Avantageusement selon l'invention, l'ensemble monté 1 comporte ainsi une surface externe 4 de roue de montage 3 et, en prolongement, un flanc externe 30 de la masse intermédiaire 29, qui sont très homogène quant à leur géométrie. De plus, ils sont libres de tout élément de fixation ou enjoliveur destiné à cacher ces éléments de fixation. La surface externe 4 de roue de montage 3 et, en prolongement, le flanc externe 30 de la masse intermédiaire 29 peuvent ainsi être fabriqués avec un profil régulier, c'est-à-dire sans discontinuités. Un tel profil régulier peut ainsi être une surface totalement plane particulièrement favorable au niveau aérodynamique sans ajout de pièce supplémentaire. On comprend notamment que la surface externe 4 peut être pleine au niveau du centre de la roue de montage 3 comme illustré dans la figure 2.

De fait, en plus d'apporter une surface libre de tout élément de fixation ou enjoliveur, l'ensemble monté 1 est également difficile à voler lorsqu'il est monté sur le véhicule automobile. En effet, le changement de chaque ensemble 1 requière une accessibilité par la surface interne 2 qui dissuadera un voleur d'essayer de les démonter. Dans l'exemple de la figure 2, la configuration du porte-fusée 13 permet d'accéder à la tige d'attache 8 pour démonter l'ensemble monté 1. Il suffit alors de tourner l'ensemble monté 1 pour accéder à chaque tige d'attache 8. Cette deuxième variante étant increvable, il devient en effet inutile de fournir une roue de secours et l'ensemble monté 1 sera retiré uniquement lorsque la bande de roulement 5 aura atteint son usure maximale par exemple pour son rechapage ou son remplacement.

Cette deuxième variante est adaptée aux véhicules électriques qui pourraient ainsi recevoir des moteurs sur la surface interne 2 des ensembles montés 1 en lieu et place de la fusée 19. Il est également immédiat que les cavités 28 permettent d'alléger l'ensemble monté 1 sans qu'il perdre ses caractéristiques mécaniques.

Enfin, la place libérée au centre, c'est-à-dire la partie pleine de la surface externe 4, peut permettre l'intégration d'éléments qu'il n'était pas possible de monter à cause de la présence des éléments de fixation 7. À titre d'exemple nullement limitatif, le centre de la roue de montage 3 pourrait ainsi intégrer un circuit de transmission de signaux sans contact, un micro-processeur ou encore des éléments d'éclairage.

Comme visible à la figure 3, une troisième variante du premier mode comporte une bande de roulement 5 qui est solidaire de la roue de montage 3 par une masse intermédiaire 29 en polyuréthane ou en caoutchouc en formant un ensemble monté 1 du type composite. Comme visible à la figure 3, la bande de roulement 5 peut comporter un renfort 10 (par exemple une nappe de renfort) permettant d'assurer une bonne tenue mécanique et/ou une bonne rigidité à proximité de l'aire de contact avec la chaussée. De plus, la roue de montage 3 comporte des trous d'attache 6 régulièrement répartis autour de l'axe de rotation A sur sa surface interne 2.

Toutefois, à la différence de la deuxième variante, dans la troisième variante, la masse intermédiaire 29 et la roue de montage 3 sont venus de matière. Comme visible à la figure 3, la masse intermédiaire 29 et la roue de montage 3 comprennent au moins une partie comportant une pluralité de cavités 28. Préférentiellement dans cette troisième variante, les cavités 28 sont emprisonnées dans la masse intermédiaire 29 et la roue de montage 3.

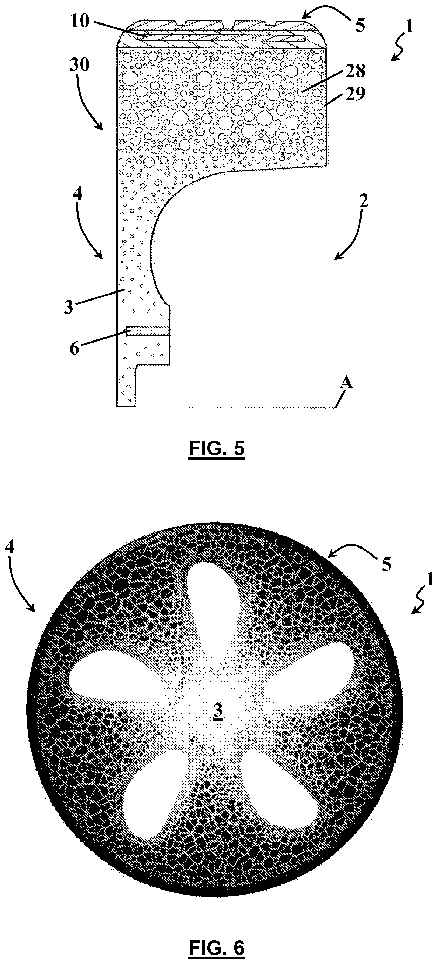

De plus, de manière encore plus préférée, le matériau de la masse intermédiaire 29 et de la roue de montage 3 comporte plus de cavités à proximité de la bande de roulement 5 que du centre de la roue de montage 3. On comprend qu'il est souhaité une rigidité qui varie graduellement entre le centre de la roue de montage 3 et l'extrémité périphérique de la masse intermédiaire 29 à proximité de la bande de roulement 5. Un exemple d'ensemble monté 1 selon la troisième variante est représentée aux figures 5 à 8.

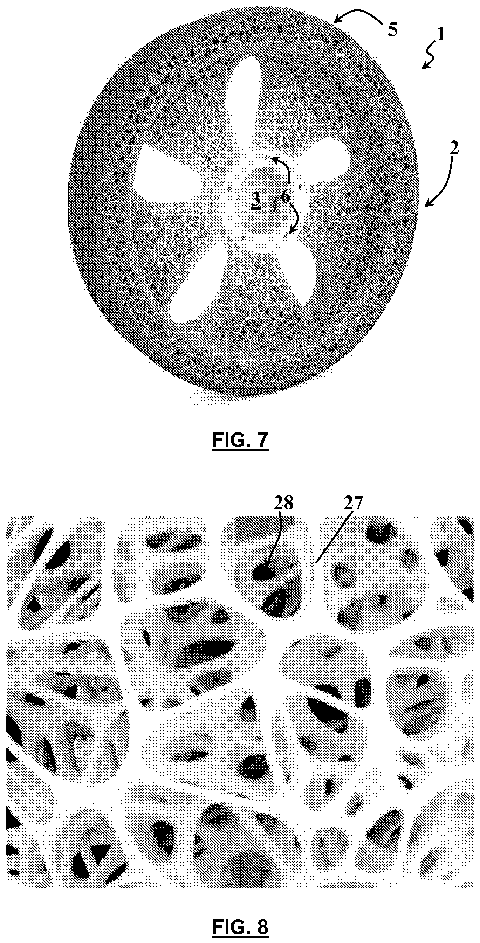

Comme visible à ces figures, à proximité du centre de la roue de montage 3, il n'y a pas ou peu de cavités 28 qui ne communiquent pas ou peu entre elles alors, qu'à l'inverse, à l'extrémité périphérique de la masse intermédiaire 29 à proximité de la bande de roulement 5, il y a beaucoup de cavités 28 qui dont la plupart communiquent entre elles. Ainsi, comme visible à la figure 8, au moins à proximité de la bande de roulement 5, la densité de cavités 28 est telle que la masse intermédiaire 29 comporte des poutres 27 de formes variées. Par conséquent, la masse intermédiaire 29 forme une structure tridimensionnelle comportant une pluralité de poutres 27. Préférentiellement selon l'invention, au moins à proximité de la bande de roulement 5, les poutres 27 sont orientées de façon à former un treillis. De manière encore plus préférée, le treillis forme une structure du type en diagramme de Voronoï avec une triangulation de Delaunay. Dans l'exemple nullement limitatif des figures 6 et 7, on s'aperçoit que des poutres 27 s'étendent sur une grande partie de l'ensemble monté 1.

La roue de montage 3 apporte donc une grande rigidité notamment au niveau de son centre qui est comparable à la roue de montage 3 des première et deuxième variantes tout en ayant un aspect homogène avec la masse intermédiaire 29. Enfin, la masse intermédiaire 29 permet d'apporter une élasticité et une résistance mécanique comparable au bandage pneumatique 9 de la première variante tout en étant increvable.

À la figure 3, on peut voir que le porte-fusée 13 reçoit dans sa partie centrale ajourée une fusée 19 destinée à transmettre un mouvement à l'ensemble monté 1. Plus précisément, le mouvement relatif entre la fusée 19 et le porte-fusée 13 est rendu possible par la réception de la fusée 19 dans un moyeu 21 monté dans le porte-fusée 13 à l'aide de roulements 23.

Dans le montage visible à la figure 3, on comprend que le système de suspension 11 est préalablement équipé de la fusée 19, du moyeu 21 et d'un dispositif de freinage 25 (représenté par un disque de frein à la figure 3). L'ensemble monté 1 est ensuite ajusté sur la collerette 20 du moyeu 21 puis attaché par coopération entre les trous d'attache 6 et les tiges d'attache 8.

Plus précisément, l'ensemble monté 1 est approché du moyeu 21 par un opérateur positionné du côté de la surface interne 2 de la roue de montage 3. L'opérateur positionne l'ensemble monté 1 de façon à ce que les trous d'attache 6 soient en face des tiges d'attache 8 puis visse les tiges d'attache 8 jusqu'à ce que chaque tête des tiges d'attache 8 soit bloquée contre le moyeu 21. Chaque tige d'attache 8 rend donc solidaire le système de suspension 11 avec l'ensemble monté 1 uniquement par montage depuis la surface interne 2 de la roue de montage 3.

Avantageusement selon l'invention, l'ensemble monté 1 comporte ainsi une surface externe 4 de roue de montage 3 et, en prolongement, un flanc externe 30 de la masse intermédiaire 29, qui sont très homogènes dans leur géométrie et qui apportent un aspect monolithique. De plus, ils sont libres de tout élément de fixation ou enjoliveur destiné à cacher ces éléments de fixation. La surface externe 4 de roue de montage 3 et, en prolongement, le flanc externe 30 de la masse intermédiaire 29 peuvent ainsi être fabriqués avec un profil régulier, c'est-à-dire sans discontinuités. Un tel profil régulier peut ainsi être une surface totalement plane particulièrement favorable au niveau aérodynamique sans ajout de pièce supplémentaire. On comprend notamment que la surface externe 4 peut être pleine au niveau du centre de la roue de montage 3 comme illustré dans la figure 3.

De fait, en plus d'apporter une surface qui est libre de tout élément de fixation ou enjoliveur, l'ensemble monté 1 est également difficile à voler lorsqu'il est monté sur un véhicule automobile. En effet, le changement de chaque ensemble monté 1 requière une accessibilité par la surface interne 2 qui dissuadera un voleur d'essayer de les démonter. Dans l'exemple de la figure 3, la configuration du porte-fusée 13 permet d'accéder à la tige d'attache 8 pour démonter l'ensemble monté 1. Il suffit alors de tourner l'ensemble monté 1 pour accéder à chaque tige d'attache 8. Cette troisième variante étant increvable, il devient en effet inutile de fournir une roue de secours et l'ensemble monté 1 sera retiré uniquement lorsque la bande de roulement 5 aura atteint son usure maximale pour, par exemple, son rechapage ou son remplacement.

En outre, la place libérée au centre, c'est-à-dire la partie pleine de la surface externe 4, peut permettre l'intégration d'éléments qu'il n'était pas possible de monter à cause de la présence des éléments de fixation 7. À titre d'exemple nullement limitatif, le centre de la roue de montage 3 pourrait ainsi intégrer un circuit de transmission de signaux sans contact, un micro-processeur ou encore des éléments d'éclairage.

Cette troisième variante est particulièrement adaptée aux véhicules électriques qui pourraient ainsi recevoir des moteurs sur la surface interne 2 des ensembles montés 1 en lieu et place de la fusée 19. On comprend qu'elle peut être obtenue par fabrication additive. Il est également immédiat que les cavités 28 permettent d'alléger l'ensemble monté 1 sans qu'il perde ses caractéristiques mécaniques.

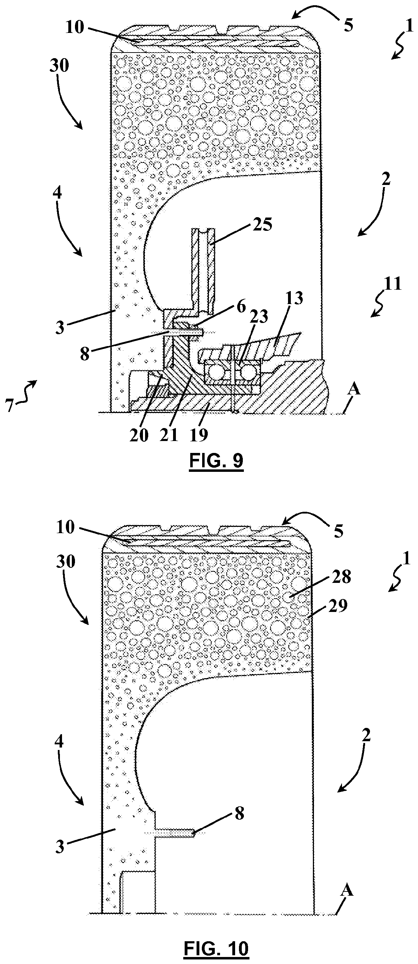

Un deuxième mode de réalisation est visible aux figures 9 et 10. À la différence du premier mode de réalisation, dans le deuxième mode de réalisation le trou d'attache 6 et la tige d'attache 8 sont intervertis. Il est dès lors immédiat que les trois variantes du premier mode de réalisation sont également applicables au deuxième mode de réalisation selon les mêmes effets techniques et avantages. Toutefois, le deuxième mode de réalisation est uniquement illustré aux figures 9 et 10 selon une variante similaire à la troisième variante du premier mode de réalisation.

L'ensemble monté 1 selon le deuxième mode comporte une bande de roulement 5 qui est solidaire de la roue de montage 3 par une masse intermédiaire 29 en polyuréthane ou en caoutchouc en formant un ensemble monté 1 du type composite. Comme visible aux figures 9 et 10, la bande de roulement 5 peut comporter un renfort 10 (par exemple une nappe de renfort) permettant d'assurer une bonne tenue mécanique et/ou une bonne rigidité à proximité de l'aire de contact avec la chaussée. De plus, la roue de montage 3 comporte des tiges d'attache 8 régulièrement répartis autour de l'axe de rotation A sur sa surface interne 2.

Comme dans la troisième variante du premier mode de réalisation, la masse intermédiaire 29 et la roue de montage 3 sont venus de matière. Comme visible aux figures 9 et 10, la masse intermédiaire 29 et la roue de montage 3 comprennent au moins une partie comportant une pluralité de cavités 28.

De plus, de manière préférée, le matériau de la masse intermédiaire 29 et de la roue de montage 3 comporte plus de cavités à proximité de la bande de roulement 5 que du centre de la roue de montage 3. On comprend qu'il est souhaité une rigidité qui varie graduellement entre le centre de la roue de montage 3 et l'extrémité périphérique de la masse intermédiaire 29 à proximité de la bande de roulement 5.

La roue de montage 3 apporte donc une grande rigidité notamment au niveau de son centre qui est comparable à la roue de montage 3 des première et deuxième variantes du premier mode de réalisation tout en ayant un aspect homogène avec la masse intermédiaire 29. Enfin, la masse intermédiaire 29 permet d'apporter une élasticité et une résistance mécanique comparable au bandage pneumatique 9 de la première variante premier mode de réalisation tout en étant increvable.

À la figure 9, on peut voir que le porte-fusée 13 reçoit dans sa partie centrale ajourée une fusée 19 destinée à transmettre un mouvement à l'ensemble monté 1. Plus précisément, le mouvement relatif entre la fusée 19 et le porte-fusée 13 est rendu possible par la réception de la fusée 19 dans un moyeu 21 monté dans le porte-fusée 13 à l'aide de roulements 23.

Dans le montage visible à la figure 9, on comprend que le système de suspension 11 est préalablement équipé de la fusée 19, du moyeu 21 et d'un dispositif de freinage 25 (représenté par un disque de frein à la figure 9). L'ensemble monté 1 est ensuite ajusté sur la collerette 20 du moyeu 21 puis attaché par coopération entre les trous d'attache 6 et les tiges d'attache 8. Plus précisément, chaque tige d'attache 8 de l'ensemble monté 1 forme un goujon au moins partiellement fileté et destiné à coopérer avec un trou d'attache 6 formé par un écrou.

Plus précisément, l'ensemble monté 1 est approché du moyeu 21 par un opérateur positionné du côté de la surface interne 2 de la roue de montage 3. L'opérateur positionne l'ensemble monté 1 de façon à ce que les tiges d'attache 8 soient en face de trous du moyeu 21 puis visse les trous d'attache 6 jusqu'à ce que chaque trou d'attache 6 soit bloqué contre le moyeu 21. Chaque trou d'attache 6 rend donc solidaire le système de suspension 11 avec l'ensemble monté 1 uniquement par montage depuis la surface interne 2 de la roue de montage 3.

Avantageusement selon l'invention, l'ensemble monté 1 comporte ainsi une surface externe 4 de roue de montage 3 et, en prolongement, un flanc externe 30 de la masse intermédiaire 29, qui sont très homogènes dans leur géométrie et qui apportent un aspect monolithique. De plus, ils sont libres de tout élément de fixation ou enjoliveur destiné à cacher ces éléments de fixation. La surface externe 4 de roue de montage 3 et, en prolongement, le flanc externe 30 de la masse intermédiaire 29 peuvent ainsi être fabriqués avec un profil régulier, c'est-à-dire sans discontinuités. Un tel profil régulier peut ainsi être une surface totalement plane particulièrement favorable au niveau aérodynamique sans ajout de pièce supplémentaire. On comprend notamment que la surface externe 4 peut être pleine au niveau du centre de la roue de montage 3 comme illustré dans la figure 9.

De fait, en plus d'apporter une surface qui est libre de tout élément de fixation ou enjoliveur, l'ensemble monté 1 est également difficile à voler lorsqu'il est monté sur un véhicule automobile. En effet, le changement de chaque ensemble monté 1 requière une accessibilité par la surface interne 2 qui dissuadera un voleur d'essayer de les démonter. Dans l'exemple de la figure 9, la configuration du porte-fusée 13 permet d'accéder au trou d'attache 6 pour démonter l'ensemble monté 1. Il suffit alors de tourner l'ensemble monté 1 pour accéder à chaque trou d'attache 6. Ce deuxième mode de réalisation étant increvable, il devient en effet inutile de fournir une roue de secours et l'ensemble monté 1 sera retiré uniquement lorsque la bande de roulement 5 aura atteint son usure maximale pour, par exemple, son rechapage ou son remplacement.

En outre, la place libérée au centre, c'est-à-dire la partie pleine de la surface externe 4, peut permettre l'intégration d'éléments qu'il n'était pas possible de monter à cause de la présence des éléments de fixation 7. À titre d'exemple nullement limitatif, le centre de la roue de montage 3 pourrait ainsi intégrer un circuit de transmission de signaux sans contact, un micro-processeur ou encore des éléments d'éclairage.

Ce deuxième mode de réalisation est particulièrement adapté aux véhicules électriques qui pourraient ainsi recevoir des moteurs sur la surface interne 2 des ensembles montés 1 en lieu et place de la fusée 19. On comprend qu'il peut être obtenu par fabrication additive. Il est également immédiat que les cavités 28 permettent d'alléger l'ensemble monté 1 sans qu'il perde ses caractéristiques mécaniques.

L'invention n'est pas limitée aux modes de réalisation et variantes présentés et d'autres modes de réalisation et variantes apparaîtront clairement à l'homme du métier. Il est notamment possible d'utiliser d'autres éléments de fixation 7 sans perdre les avantages de l'invention.

De manière nullement limitative, les éléments de fixation 7 pourraient, en remplacement ou en addition, comporter une partie d'au moins une fixation du type à baïonnette munie d'un élément de verrouillage.

De plus, le système de suspension 11 et/ou le dispositif de freinage 25 peuvent être de technologies différentes sans perdre les avantages de l'invention. À titre nullement limitatif, le système de suspension 11 pourrait être du type à bras tirés et le dispositif de freinage 25 du type à tambour.

Enfin, suivant la configuration du porte-fusée 13 et plus généralement du système de suspension 11, il peut être nécessaire d'aménager, dans le système de suspension 11, une ouverture permettant d'accéder aux éléments de fixation 7 de l'ensemble monté 1.

## Revendications

1. Roue de montage (3) pour véhicule automobile comportant une surface interne (2) et une surface externe (4), la surface interne (2) n'étant pas visible lorsque la roue de montage (3) est montée sur le véhicule automobile, et au moins un élément de fixation (7) agencé pour attacher la roue de montage (3) au véhicule automobile, l'élément de fixation (7) étant agencé sur la surface interne (2) de la roue de montage (3) afin de laisser la surface externe (4) de la roue de montage (3) libre de tout élément de fixation (7) pour que ce dernier ne soit pas visible lorsque la roue de montage (3) est montée sur le véhicule automobile, **caractérisée en ce que** la surface externe de la roue de montage est fabriquée avec un profil régulier, sans discontinuités au niveau du centre de la roue de montage, voire du centre de la roue de montage à la bande de roulement.

2. Roue de montage (3) selon la revendication précédente, dans laquelle l'élément de fixation (7) comporte une partie d'au moins une fixation du type trou d'attache (6) - tige d'attache (8).

3. Roue de montage (3) selon la revendication précédente, dans laquelle le trou d'attache (6) est un alésage ou un écrou et la tige d'attache (8) est une vis ou goujon au moins partiellement fileté.

4. Roue de montage (3) selon la revendication 2 ou 3, dans laquelle le trou d'attache (6) est ménagé sur la surface interne (2) de la roue de montage (3).

5. Roue de montage (3) selon la revendication 2 ou 3, dans laquelle la tige d'attache (8) est montée sur la surface interne (2) de la roue de montage (3).

6. Ensemble monté (1) comprenant une bande de roulement (5) agencée pour permettre le roulage de l'ensemble monté (1) sur une chaussée, **caractérisé en ce qu'**il comporte une roue de montage selon l'une quelconque des revendications précédentes.

7. Ensemble monté (1) selon la revendication précédente, dans lequel la bande de roulement (5) est solidaire de la roue de montage (3) par un bandage pneumatique (9).

8. Ensemble monté (1) selon la revendication 6, dans lequel la bande de roulement (5) est solidaire de la roue de montage (3) par une masse intermédiaire (29).

9. Ensemble monté (1) selon la revendication précédente, dans lequel la masse intermédiaire (29) comprend au moins une partie réalisée dans un matériau comportant une pluralité de cavités (28).

10. Ensemble monté (1) selon la revendication 8, dans lequel la masse intermédiaire (29) et la roue de montage (3) sont venus de matière et comprennent au moins une partie réalisée dans un matériau comportant une pluralité de cavités (28).

11. Ensemble monté (1) selon la revendication précédente, dans lequel le matériau comportant une pluralité de cavités (28) présente plus de cavités (28) à proximité de la bande de roulement (5) que du centre de la roue de montage (3).

12. Ensemble monté (1) selon l'une quelconque des revendications 9 à 11, dans lequel la partie réalisée dans un matériau comportant une pluralité de cavités (28) forme une structure tridimensionnelle comportant une pluralité de poutres (27).

13. Ensemble monté (1) selon la revendication précédente, dans lequel les poutres (27) sont orientées de façon à former un treillis.

14. Ensemble monté (1) selon l'une quelconque des revendications 9 à 13, dans lequel le matériau comportant une pluralité de cavités (28) est en polyuréthane ou en caoutchouc.

15. Véhicule automobile comprenant un système de suspension (11), **caractérisé en ce qu'**il comprend un ensemble monté (1) selon l'une quelconque des revendications 6 à 14 dont l'élément de fixation (7) est attaché au système de suspension (11).

## Patentansprüche

1. Montagerad (3) für ein Kraftfahrzeug, welches eine Innenseite (2) und eine Außenseite (4), wobei die Innenseite (2) nicht sichtbar ist, wenn das Montagerad (3) am Kraftfahrzeug montiert ist, und wenigstens ein Befestigungselement (7), das dafür eingerichtet ist, das Montagerad (3) am Kraftfahrzeug anzubringen, aufweist, wobei das Befestigungselement (7) auf der Innenseite (2) des Montagerades (3) angeordnet ist, um die Außenseite (4) des Montagerades (3) frei von jedem Befestigungselement (7) zu lassen, damit dieses Letztere nicht sichtbar ist, wenn das Montagerad (3) am Kraftfahrzeug montiert ist, **dadurch gekennzeichnet, dass** die Außenseite des Montagerades mit einem regelmäßigen Profil hergestellt ist, ohne Unterbrechungen im Bereich der Mitte des Montagerades, oder sogar von der Mitte des Montagerades bis zum Laufstreifen.

2. Montagerad (3) nach dem vorhergehenden Anspruch, wobei das Befestigungselement (7) einen Teil wenigstens einer Befestigung vom Typ Befestigungsloch (6) - Befestigungsstange (8) aufweist.

3. Montagerad (3) nach dem vorhergehenden Anspruch, wobei das Befestigungsloch (6) eine Bohrung oder eine Mutter ist und die Befestigungsstange (8) eine Schraube oder ein wenigstens teilweise mit einem Gewinde versehener Bolzen ist.

4. Montagerad (3) nach Anspruch 2 oder 3, wobei das Befestigungsloch (6) auf der Innenseite (2) des Montagerades (3) ausgebildet ist.

5. Montagerad (3) nach Anspruch 2 oder 3, wobei die Befestigungsstange (8) auf der Innenseite (2) des Montagerades (3) angebracht ist.

6. Montierte Einheit (1), welche einen Laufstreifen (5) umfasst, der dafür eingerichtet ist, das Rollen der montierten Einheit (1) auf einer Fahrbahn zu ermöglichen, **dadurch gekennzeichnet, dass** sie ein Montagerad nach einem der vorhergehenden Ansprüche aufweist.

7. Montierte Einheit (1) nach dem vorhergehenden Anspruch, wobei der Laufstreifen (5) durch einen Luftreifen (9) fest mit dem Montagerad (3) verbunden ist.

8. Montierte Einheit (1) nach Anspruch 6, wobei der Laufstreifen (5) durch eine Zwischenmasse (29) fest mit dem Montagerad (3) verbunden ist.

9. Montierte Einheit (1) nach dem vorhergehenden Anspruch, wobei die Zwischenmasse (29) wenigstens einen Teil umfasst, der aus einem Material hergestellt ist, das mehrere Hohlräume (28) aufweist.

10. Montierte Einheit (1) nach Anspruch 8, wobei die Zwischenmasse (29) und das Montagerad (3) materialeinheitlich ausgebildet sind und wenigstens einen Teil umfassen, der aus einem Material hergestellt ist, das mehrere Hohlräume (28) aufweist.

11. Montierte Einheit (1) nach dem vorhergehenden Anspruch, wobei das Material, das mehrere Hohlräume (28) aufweist, in der Nähe des Laufstreifens (5) mehr Hohlräume (28) als in der Nähe der Mitte des Montagerades (3) aufweist.

12. Montierte Einheit (1) nach einem der Ansprüche 9 bis 11, wobei der Teil, der aus einem Material hergestellt ist, das mehrere Hohlräume (28) aufweist, eine dreidimensionale Struktur bildet, die mehrere Träger (27) aufweist.

13. Montierte Einheit (1) nach dem vorhergehenden Anspruch, wobei die Träger (27) so ausgerichtet sind, dass sie ein Gitterwerk bilden.

14. Montierte Einheit (1) nach einem der Ansprüche 9 bis 13, wobei das Material, das mehrere Hohlräume (28) aufweist, aus Polyurethan oder aus Kautschuk besteht.

15. Kraftfahrzeug, welches ein Aufhängungssystem (11) umfasst, **dadurch gekennzeichnet, dass** es eine montierte Einheit (1) nach einem der Ansprüche 6 bis 14 umfasst, deren Befestigungselement (7) an dem Aufhängungssystem (11) angebracht ist.

## Claims

1. Mounting wheel (3) for a motor vehicle comprising an internal surface (2) and an external surface (4), the internal surface (2) not being visible when the mounting wheel (3) is mounted on the motor vehicle, and at least one fixing element (7) designed to attach the mounting wheel (3) to the motor vehicle, the fixing element (7) being arranged on the internal surface (2) of the mounting wheel (3) in such a way as to leave the external surface (4) of the mounting wheel (3) free of any fixing element (7) so that the fixing element is not visible when the mounting wheel (3) is mounted on the motor vehicle, **characterized in that** the external surface of the mounting wheel is manufactured with an even profile, without discontinuities notably in the centre of the mounting wheel, or even, from the centre of the mounting wheel to the tread .

2. Mounting wheel (3) according to the preceding claim, in which the fixing element (7) comprises one part of at least one fixing of the fixing hole (6) - fixing shank (8) type.

3. Mounting wheel (3) according to the preceding claim, in which the fixing hole (6) is a bore or a nut and the fixing shank (8) is an at least partially threaded screw or stud.

4. Mounting wheel (3) according to Claim 2 or 3, in which the fixing hole (6) is formed on the internal surface (2) of the mounting wheel (3).

5. Mounting wheel (3) according to Claim 2 or 3, in which the fixing shank (8) is mounted on the internal surface (2) of the mounting wheel (3).

6. Mounted assembly (1) comprising a tread (5) designed to allow the mounted assembly (1) to roll along a roadway, **characterized in that** it comprises a mounting wheel according to any one of the preceding claims.

7. Mounted assembly (1) according to the preceding claim, in which the tread (5) is secured to the mounting wheel (3) by a pneumatic tyre casing (9).

8. Mounted assembly (1) according to Claim 6, in which the tread (5) is secured to the mounting wheel (3) by an intermediate mass (29).

9. Mounted assembly (1) according to the preceding claim, in which the intermediate mass (29) comprise at least a part made from a material comprising a plurality of cavities (28).

10. Mounted assembly (1) according to Claim 8, in which the intermediate mass (29) and the mounting wheel (3) are formed together in the same material and comprise at least a part made from a material comprising a plurality of cavities (28).

11. Mounted assembly (1) according to the preceding claim, in which the material comprising a plurality of cavities (28) has more cavities (28) near the tread (5) than near the centre of the mounting wheel (3).

12. Mounted assembly (1) according to any one of Claims 11 to 13, in which the part made in a material comprising a plurality of cavities (28) forms a three-dimensional structure comprising a plurality of beams (27).

13. Mounted assembly (1) according to the preceding claim, in which the beams (27) are oriented in such a way as to form a lattice.

14. Mounted assembly (1) according to any one of Claims 9 to 13, in which the material comprising a plurality of cavities (28) is made of polyurethane or of rubber.

15. Motor vehicle comprising a suspension system (11), **characterized in that** it comprises a mounted assembly (1) according to any one of Claims 6 to 14, the fixing element (7) of which is attached to the suspension system (11).
